# EUROPÄISCHE PATENTANMELDUNG

(11) **EP 4 152 271 A1**
(43) Veröffentlichungstag der Anmeldung: **22.03.2023**
(21) Anmeldenummer: 21198054.5
(22) Anmeldetag: 21.09.2021
(51) Int. Cl.: G06T 19/00

(54) **VERFAHREN UND VORRICHTUNG ZUM COMPUTERGESTÜTZTEN VERVOLLSTÄNDIGEN EINES DURCH PUNKTE GEBILDETEN 3D-TEILMODELLS**

(71) Anmelder: Siemens Schweiz AG, 8047 Zürich (CH)
(72) Erfinder: Mayer, Hermann Georg, 83209 Prien am Chiemsee (DE)
(74) Vertreter: Siemens Patent Attorneys

(57) **Zusammenfassung**

Die Erfindung beansprucht ein Verfahren zum computergestützten Vervollständigen eines 3D-Teilmodells von einem durch mindestens eine Erfassungseinrichtung erfassten Teilbereich eines Objekts (T, K), wobei das 3D-Teilmodell mit einem verdeckten oder fehlenden Teilbereich des Objekts, der sich außerhalb des zu vervollständigenden 3D-Teilmodells des Objekts befindet, ergänzt werden kann, aufweisend folgende Schritte:
a) Ermitteln einer Geometrie (R, C) des Objektes durch Vergleich des 3D-Teilmodells mit einem oder mehreren vergleichbaren Objekten aus einer vorgebbaren oder vorbestimmten Menge von Objekten und/oder durch Vergleich des 3D-Teilmodells mit einem 3D-Modell, das durch Spiegeln zumindest eines Teils des 3D-Teilmodells an einer zuvor bestimmten Symmetrieebene (SY) oder Symmetrieachse entstanden ist,
b) Identifizieren des verdeckten oder fehlenden Teilbereichs des Objekts anhand der ermittelten Geometrie des Objekts,
c) Ergänzen des 3D-Teilmodells zu einem vollständigen 3D-Modell mit dem identifizierten verdeckten oder fehlenden Teilbereich des Objekts; und
c) Ausgeben des vervollständigten 3D-Modells an einer Ausgabeeinheit.

## Beschreibung

Die Erfindung betrifft ein Verfahren und eine Vorrichtung zum computergestützten Vervollständigen eines durch Punkte gebildeten 3D-Teilmodells sowie ein zugehöriges Computerprogramm (produkt) .

Durch die zunehmende Verbreitung von günstigen LiDAR-Geräten (Abkürzung für Englisch Light imaging, detection and ranging) können inzwischen für eine Vielzahl von Anwendungen Punktwolken generiert und ausgewertet werden. LiDAR ist eine dem Radar verwandte Methode zur optischen Abstands- und Geschwindigkeitsmessung sowie zur Fernmessung atmosphärischer Parameter. Es ist eine Form des dreidimensionalen Laserscanning. Eine Punktwolke ist eine Menge von Punkten eines Vektorraums, die eine unorganisierte räumliche Struktur ("Wolke") aufweist. Eine Punktwolke ist durch die enthaltenen Punkte beschrieben, die jeweils durch ihre Raumkoordinaten erfasst sind.

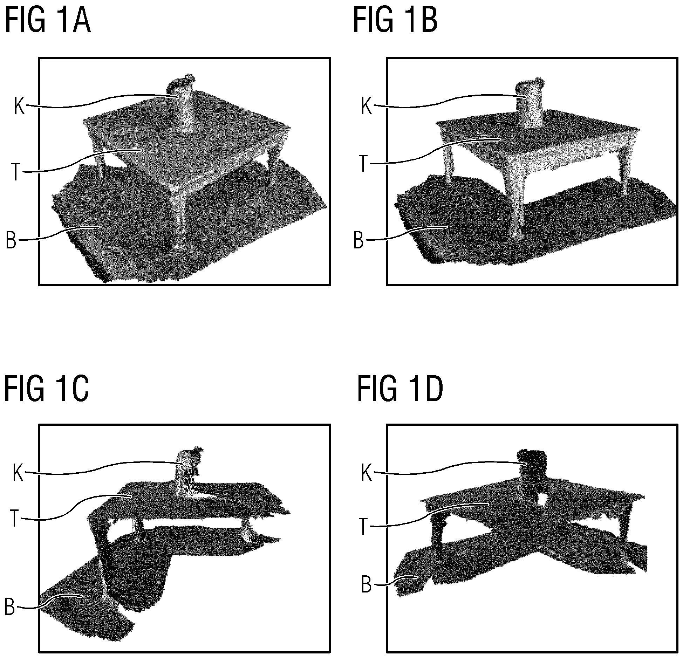

Heutzutage können Punktwolken mit mobilen Geräten ebenso schnell wie Videofilme erzeugt werden, bzw. können inzwischen auch einfache 3D-Modelle von Körperteilen (insbesondere Gesicht / Kopf) von jedem selbst erzeugt werden (z.B. mit der vom iPhone bekannten FaceID Technologie). Ein Nachteil dieser schnellen, einfachen Erzeugung von Punktwolken ist aber deren Unvollständigkeit. So werden z.B. beim Erfassen einer Einrichtungsszene nur die Oberflächen erfasst, die unmittelbar vom Benutzer aus sichtbar sind. In Figur 1a werden Gegenstände als Punktwolke in Originalansicht gezeigt. Dort ist ein Tisch T, der auf einem Boden B steht, mit einer darauf abgestellten Kanne K abgebildet. Sobald die Punktwolke aber von einem anderen Blickwinkel aus betrachtet wird, erscheint sie nur unvollständig. Die ist in den Figuren 1b bis 1d erkennbar. In Figur 1b werden dieselben Gegenstände mit einer anderen Ansicht von weiter "unten" gezeigt, wenn der Boden die Bezugsebene für ein Koordinatensystem und verschiedene Ansichten darstellt. In Figur 1c werden dieselben Gegenstände von einer Ansicht rechts von der Originalansicht und in Figur 1d dieselben Gegenstände von einer Ansicht von der gegenüberliegenden Seite von der Originalansicht gezeigt.

Mit einem Meshing-Verfahren können 3D-Oberflächen, 3D-Objekte und digitale Geländemodelle (abgekürzt DGM) bzw. Gebäudemodelle (abgekürzt BIM) aus der Punktwolke erstellt werden, die in einem CAD-System (Computer Aided Design) weiterverarbeitet werden können.

Bildbasiertes Meshing bezeichnet den automatisierten Prozess, vereinfachte Oberflächenbeschreibungen aus dreidimensionalen Bilddateien zu erstellen, ohne eine vorherige Rekonstruktion der Oberfläche durchzuführen. Bilddateien, die beispielsweise durch ein bildgebendes System bzw. eine Erfassungseinrichtung erstellt worden sind, können durch dieses Verfahren in ein Computermodell überführt werden. Das Erstellen von Polygonnetzen aus einer dreidimensionalen Bilddatei birgt eine Vielzahl an Herausforderungen, aber auch Möglichkeiten, um realistischere und genauere geometrische Beschreibungen von den Definitionsbereichen zu machen. Von durch Meshing erstellten Modellen können umgekehrt Punktwolken erzeugt werden.

Neben der rein optischen Problematik verdeckter bzw. fehlender Anteile, erschwert dies auch die Berechnung von Oberflächen, Massen und Volumen, wenn z.B. durch schnelle Kamera-Erfassung bzw. -Scans abgeschätzt werden soll, wieviel freier Platz in einem Büro noch für weitere Möblierung zur Verfügung steht, bzw. welche Flächen / Oberflächen gereinigt werden müssen. Als weiteres Beispiel wäre die individuelle Anfertigung von Gegenständen oder medizinischen Hilfsmitteln denkbar (z.B. Teilscan des Kopfs zur Anpassung von Brillen / Helmen oder Scan der Hand zum Anpassen einer individuellen Handschiene). Auch in diesem Fall kann ein Benutzer kaum einen vollständigen Scan des jeweiligen Körperteils bewerkstelligen, während er selbst das Gerät bedient. Ziel ist es daher die gescannte Szene bzw. das gescannte Objekt nach Möglichkeit zu vervollständigen, um den visuellen Eindruck der Szene zu verbessern und auch um einfache Oberflächen- und Volumenabschätzungen zu ermöglichen.

Damit bei 3D-Scans alle Oberflächen vorhanden bzw. geschlossen sind, ist es möglich, einzelne Objekte vollständig mit dem Erfassungs- bzw. Aufnahmegerät zu umfahren bzw. die Objekte bei feststehendem Aufnahmegerät selbst zu bewegen (z.B. auf einem Drehteller). Dies ist bei rein bildbasierten Rekonstruktionsverfahren ohne LiDAR-Technologie notwendig. Insbesondere beim Scannen von Räumen ist dieses Vorgehen aber wenig praktikabel und zeitraubend. Um z.B. das Mobiliar korrekt zu erfassen, müsste man um jeden Stuhl und hinter / unter jeden Tisch scannen, um diese Einrichtungsgegenstände vollständig abzubilden. Mit bestimmten Geräten (z.B. Standscannern oder fahrbaren Scannern) ist dies nicht möglich.

Eine weitere Möglichkeit die Szene durch zusätzliche Informationen zu erweitern besteht darin, Teile der Punktwolke durch bekannte Objekte zu ersetzen, die das Gerät bereits kennt (3D-Objekterkennung). Dies funktioniert allerdings nur bei einer ausreichend hohen Qualität der Punktwolke - insbesondere sollte die Punktwolke des gescannten Objekts weitgehend vollständig vorhanden sein. Zudem ist die Objekterkennung auf Punktwolken sehr rechenintensiv und kann deshalb meist nur zeitlich abgesetzt und räumlich getrennt von der Aufnahme durchgeführt werden.

Für viele Anwendungen, z.B. Berechnung der Oberfläche für Reinigungsaufträge, Möblierung von Gebäudeflächen und Installation von Gebäudesystemen, bleibt aktuell oft nur eine manuelle Nachbearbeitung der gescannten Daten übrig.

Die Aufgabe der Erfindung besteht nun darin, die oben genannten Nachteile zu vermeiden und ein möglichst universell einsetzbares Verfahren bzw. eine möglichst universell einsetzbare Vorrichtung zum Vervollständigen/Komplettieren eines durch Punkte gebildeten 3D-Teilmodells von einem durch eine Erfassungseinrichtung erfassten Teilbereich eines Objekts anzugeben.

Die Aufgabe der Erfindung besteht darin, ein gegenüber des eingangs genannten Standes der Technik verbessertes Verfahren sowie eine verbesserte Steuereinrichtung anzugeben.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zum computergestützten Vervollständigen bzw. Komplettieren 3D-Teilmodells von einem durch mindestens eine Erfassungseinrichtung erfassten Teilbereich eines Objekts, wobei das 3D-Teilmodell mit einem verdeckten oder fehlenden Teilbereich des Objekts, der sich außerhalb des zu vervollständigenden 3D-Teilmodells des Objekts befindet, ergänzt werden kann, aufweisend folgende Schritte:
a) Ermitteln einer Geometrie des Objektes durch Vergleich des 3D-Teilmodells mit einem oder mehreren vergleichbaren Objekten aus einer vorgebbaren oder vorbestimmten Menge von Objekten und/oder durch Vergleich des 3D-Teilmodells mit einem 3D-Modell, das durch Spiegeln zumindest eines Teils des 3D-Teilmodells an einer zuvor bestimmten Symmetrieebene oder Symmetrieachse entstanden ist,
b) Identifizieren des verdeckten oder fehlenden Teilbereichs des Objekts anhand der ermittelten Geometrie des Objekts,
c) Ergänzen des 3D-Teilmodells zu einem vollständigen 3D-Modell mit dem identifizierten verdeckten oder fehlenden Teilbereich des Objekts; und
c) Ausgeben des vervollständigten 3D-Modells an einer Ausgabeeinheit (z.B. Display).

Der verdeckte bzw. fehlenden Teilbereich des Objekts ist, der außerhalb des zu vervollständigenden 3D-Teilmodells des Objekts liegt - mit anderen Worten ausgedrückt - disjunkt zu dem Teilbereich des Objekts, der durch das 3D-Teilmodell dargestellt bzw. abgedeckt wird.

Das 3D-Modell bzw. das 3D-Teilmodell kann - wie eingangs erläutert - durch Punkte (Punktwolke) oder durch Meshes (Mesh-Modell) gebildet werden.

Erfindungsgemäß wird der gescannte bzw. erfasst (An)teil eines 3D-Modells um den von der Erfassungseinrichtung aus nicht sichtbaren (An)teil ergänzt. Dieser (An-)Teil wird identifiziert.

Für den Vergleich in Schritt a) ein 3D-Objekterkennungsverfahrens durchgeführt wird, das eine Wissensbasis von Objekten nach einem oder mehreren vergleichbaren Objekten durchsucht und erkennt, wobei als Ergebnis des durchgeführten 3D-Objekterkennungsverfahrens eine Menge von erkannten vergleichbaren Objekten ausgegeben wird.

Für das 3D-Objekterkennungsverfahren kann ein trainiertes sowie trainierbares Neuronales Netz verwendet werden, um eine Ähnlichkeit zwischen dem 3D-Teilmodell und zumindest einem Objekt aus der Wissensbasis zu erkennen.

So ist eine Auswahl aus Teilbereichen aus den identifizierten Objekten und/oder durch die genannte Spiegelung ergänzenden Teilbereichs des zu vervollständigenden 3D-Teilmodells möglich, die nach wenigstens einem vorgebbaren Qualitätskriterium getroffen wird. Ein Qualitätskriterium kann die Übereinstimmung bzw. Differenz in der Punkt-/Meshanzahl- und/oder - dichte sein.

Die Symmetrieebene oder -achse kann dadurch bestimmt werden, dass die Symmetrieebene oder -achse möglichst senkrecht zu einer Bezugsebene z.B. Fußboden des Objekts schrittweise über die Oberfläche des 3D-Teilobjekts verschoben wird, bis ein Vergleich ein Vergleich von Teilbereichen des 3D-Teilobjekts auf der einen Seite der Symmetrieebene oder -achse mit Teilbereichen des 3D-Teilobjekts auf der anderen Seite der Symmetrieebene oder -achse einen vorgebbaren Übereinstimmungsgrad erreicht. Der Übereinstimmungsgrad kann sich z.B. aus der Differenz der Punkt- bzw. Meshanzahl, -dichte, Farbe der Punkte bzw. der Meshbereich ergeben.

Die oben genannten Schritte können wiederholt werden, bis ein vorgebbares Qualitätsmaß z.B. 90% an Vollständigkeit des vervollständigten 3D-Modells erreicht wird. Die Wiederholung des Vorgehens ist vor allem dann sinnvoll, wenn der durch die Erfassungseinrichtung erfasste Teilbereich nur eine Seite des Objekts umfasst, da dann durch mehrfache Spiegelung an weiteren bestimmten Symmetrieebenen bzw. - achsen das 3D-Teilmodell zu einem vervollständigten 3D-Modell iterativ ergänzt werden kann.

Die Qualität der Darstellung wird dabei von Wiederholungsstufe zu -stufe ungenauer. Das Spiegelungsverfahren bietet einen guten Kompromiss zwischen Qualität und Geschwindigkeit, die für Echtzeitanwendungen geeignet ist (direkte Verbesserung des Scans während der Objekterfassung).

Ein weiterer Aspekt der Erfindung sieht eine Vorrichtung zum computergestützten Vervollständigen bzw. Komplettieren eines durch Punkte gebildeten 3D-Teilmodells von einem durch mindestens eine Erfassungseinrichtung erfassten Teilbereich eines Objekts vor, wobei das 3D-Teilmodell durch einem verdeckten oder fehlenden Teilbereich des Objekts, der sich außerhalb des zu vervollständigenden 3D-Teilmodells des Objekts befindet, ergänzt werden kann, wobei die Vorrichtung dazu ausgelegt ist, folgende Schritte auszuführen:
a) Ermitteln einer Geometrie des Objektes durch Vergleich des 3D-Teilmodells mit einem oder mehreren vergleichbaren Objekten aus einer vorgebbaren oder vorbestimmten Menge von Objekten und/oder durch Vergleich des 3D-Teilmodells mit einem 3D-Modell, das durch Spiegeln zumindest eines Teils des 3D-Teilmodells an einer zuvor bestimmten Symmetrieebene oder Symmetrieachse entstanden ist,
b) Identifizieren des verdeckten oder fehlenden Teilbereichs des Objekts anhand der ermittelten Geometrie des Objekts,
c) Ergänzen des 3D-Teilmodells zu einem vollständigen 3D-Modell mit dem identifizierten verdeckten oder fehlenden Teilbereich des Objekts; und
c) Ausgeben des vervollständigten 3D-Modells an einer Ausgabeeinheit.

Die Einheiten bzw. die Ein- /Vorrichtung, die dazu eingerichtet sind, solche Verfahrensschritte auszuführen, können hardware-, firmware- und/oder softwaremäßig implementiert sein.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einem Computer, Vorrichtung oder einer Recheneinheit der oben genannten Art abläuft oder auf einem computerlesbaren Speichermedium gespeichert ist.

Das Computerprogramm bzw. -produkt kann auf einem computerlesbaren Speichermedium gespeichert sein oder sich in einem Datenstrom befinden. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuereinrichtung oder in deren Mitteln integriert sein.

Die Vorrichtung sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Figuren 2a-2d zeigen schematisch, dass eine Symmetrieachse oder -zentrum bestimmt werden kann.

Figuren 3a-3d zeigen schematisch das Ergebnis der erfindungsgemäßen Vervollständigung des 3D-Teilmodells,

Figur 4 zeigt schematisch, wie eine Symmetrieachse oder - zentrum bestimmt werden kann,

Figur 5 zeigt schematisch ein Ablaufdiagramm.

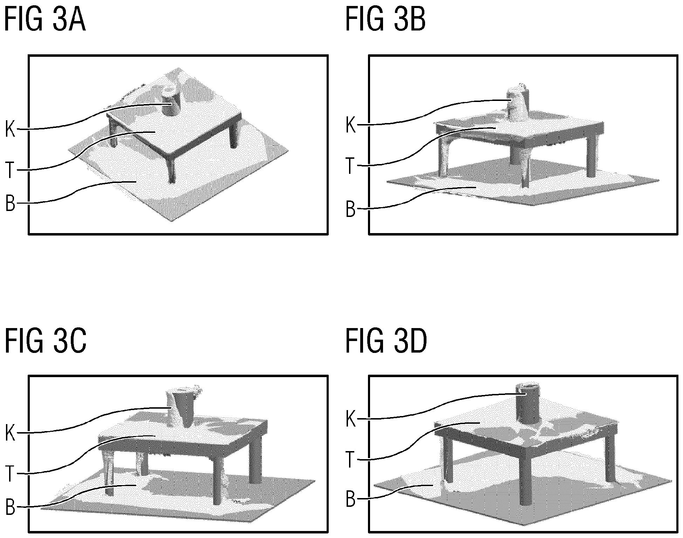

In Figur 3a werden analog zu Figur 1a Gegenstände als Punktwolke in Originalansicht gezeigt. Wenn das erfindungsgemäße Vervollständigungsverfahren angewandt wird, wird in den Figuren 3b bis 3d, die den Ansichten der Figuren 1b bis 1d entsprechen, gezeigt, dass das 3D-Modell von den Objekten Tisch T und Kanne K vollständig angezeigt werden.

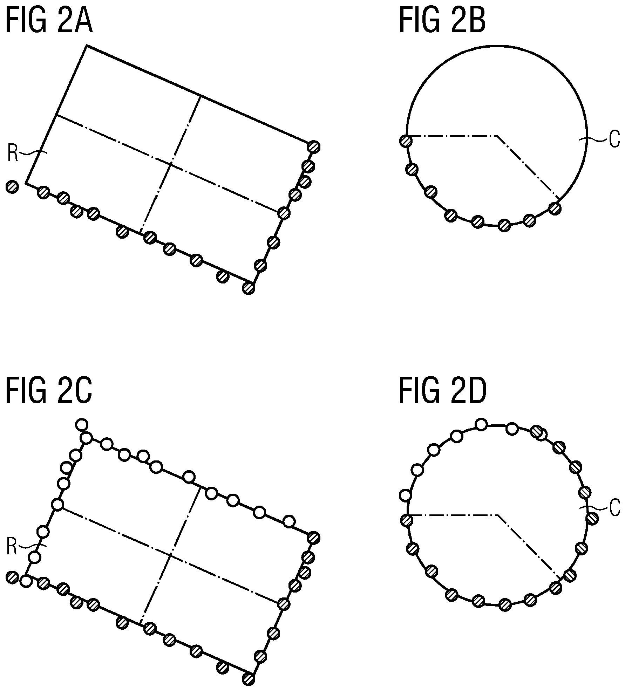

Figuren 2a bis 2d zeigen schematisch, dass Symmetrieebene (achsensymmetrisch= oder eine Symmetrieachse (rotationssymmetrisch) bestimmt werden kann. Es kann aus einer bekannten Oberfläche oft auf zumindest eine Symmetrieebene bzw. eine Symmetrieachse geschlossen werden. Wenn wie in Figur 2a das Objekt eine eckige Form R hat, wie z.B. der Tisch, dann wird nach einer Symmetrieebene (es wird angenommen, dass das Objekt achsensymmetrisch ist) gesucht (siehe Figur 2c). Wenn der Gegenstand wie in Figur 2b eine runde Form C aufweist, dann wird nach einer Symmetrie- bzw. Rotationsachse (es wird angenommen, dass das Objekt rotationssymmetrisch ist) gesucht (siehe Figur 2d).

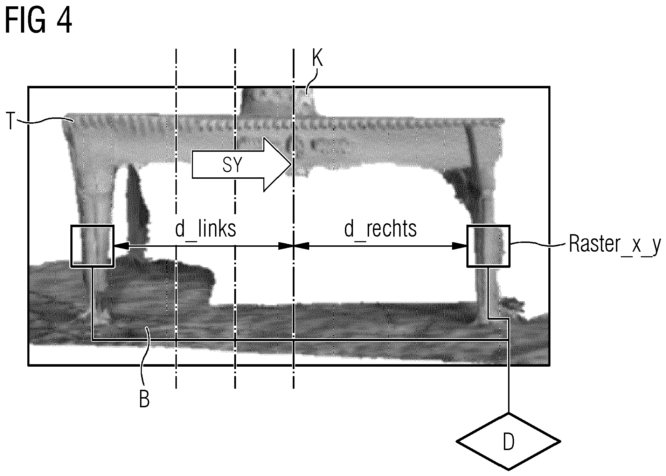

Wie beispielsweise in Figur 4 angedeutet, wird zunächst angenommen, dass die Symmetrieebene bzw. -achse der Oberfläche senkrecht zum Boden B als Bezugsebene steht. Dies trifft auf viele Gebrauchsgegenstände zu (Tische, Stühle, Schränke etc...). Zudem steht ihrerseits die Symmetrieebene bzw. -achse dann senkrecht zur erfassten Oberfläche, da die Geometrie der meisten Gebrauchsgegenstände rechte Winkel oder Rotationssymmetrie aufweisen. Daher kann nun einfach in einem binären Suchverfahren eine mögliche Symmetrieebene bzw. -achse SY über die Oberfläche geschoben werden. Dies wird in Figur 4 gezeigt. Die Qualität der Symmetrieebene bzw. -achse bestimmt sich aus einem Vergleich der Punkte bzw. Meshes links und rechts der Symmetrieebene bzw. -achse, wobei sich ein Übereinstimmungsgrad D z.B. möglichst gleiche Anzahl der Punkte bzw. Meshes, Farbe in einem Raster mit bestimmtem Abstand links/rechts von der Symmetrieebene bzw. -achse, Dichte der Punkte bzw. Meshes etc. ergibt.

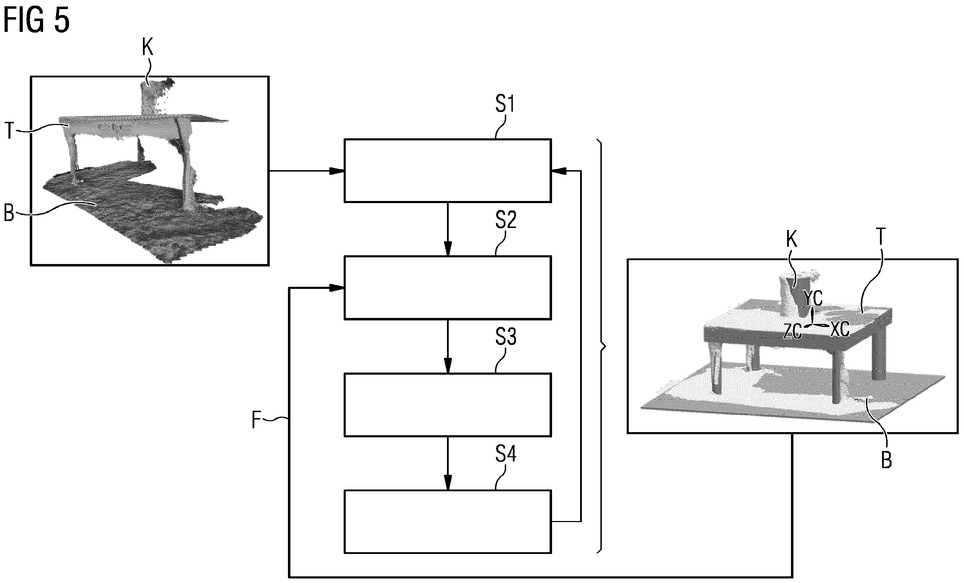

Figur 5 zeigt ein Ablaufdiagramm, in dessen Kontext das erfindungsgemäße Verfahren eingebettet sein kann. Das Verfahren kann in Echtzeitanwendungen zum Einsatz kommen, d.h. es wird eine unmittelbare Verbesserung des Scans während der Erfassung bzw. Aufnahme erzielt. Die Ausführung des Verfahrens kann auf Vorrichtungen wie z.B. Edge-Devices, Kameraplatinen etc. erfolgen.

Links in Figur 5 wird das unvollständige 3D-Modell bzw. das 3D-Teilmodell von einem Objekt, im Beispiel der Tisch T mit der Kanne K. Rechts in Figur 5 wird das vervollständigte 3D-(Teil-)modell gezeigt. Es können folgende Schritte durchgeführt werden:
Im Schritt S1 kann ein Objekterkennungsverfahren eingesetzt werden. Dazu kommt ein Vergleich bzw. Abgleich der Punktwolke bzw. des Mesh-Modells mit einer Wissensbasis von möglichen 3D-Objekten der gewünschten Szene zum Einsatz. Damit soll die Geometrie (im Beispiel eckiger Tisch und/oder runde Kanne) bzw. Form des Objektes ermittelt werden. Anhand der ermittelten Geometrie des Objekts kann der verdeckte oder fehlende Teilbereich des Objekts identifiziert werden. Das 3D-Teilmodell kann dann mit (Teil-)Bereichen des erkannten Objektes, die den identifizierten verdeckten oder fehlenden Teilbereichen entsprechen, zu einem vervollständigten 3D-Modell ergänzt werden.

Dazu wird im Wesentlichen versucht, den Abstand bzw. Differenz D der Punkte bzw. der Meshes von einem 3D-Modell eines bekannten Objektes, das aus einer vorgebbaren oder vorbestimmten Menge von Objekten vorzugsweise aus der Wissensbasis stammt, zu minimieren. Wird dadurch ein Treffer erzielt, so kann das entsprechend erkannte Objekt so mit den bestehenden Punkten/Meshes verbunden werden, dass die gesamte Oberfläche des 3D-Modells entweder durch die Punkte der Punktwolke bzw. Meshes des Mesh-Modells oder durch Teilflächen des erkannten bzw. identifizierten Objekts beschrieben werden kann (, wobei echte Daten der Punktwolke Priorität haben).

In Schritt 2 kann ein trainiertes bzw. trainierbares Neuronales Netz in einem KI-Modul (KI: Künstliche Intelligenz) zum Einsatz kommen, wenn der vorherige Vergleich nicht oder nur teilweise erfolgreich war. Der fehlende Teilbereich des 3D-Teilmodells kann dann mit Hilfe vom KI-Modul vorgeschlagenen Objekten oder Teilobjekten ergänzt werden, sofern die vorgeschlagenen Objekte einen vorgebbaren Ähnlichkeitsgrad z.B. 95% aufweisen. Es ist möglich, dass KI-Verfahren mit den Daten bzw. Rückmeldungen anderer/aller Nutzer trainiert werden, das in Figur 5 mit F gekennzeichnet ist. D.h. wird ein Objekt von mehreren Seiten (mehrere Oberflächen) gescannt bzw. erfasst. So kann jede Seite als Eingabe für ein neuronales Netz dienen, das dann die verbleibenden Oberflächen als Ausgabe ausgibt. Wird dieses Training mit genügend Nutzerdaten (die das Objekt von jeweils verschiedenen Seiten bzw. Ansichten gesehen haben) wiederholt, so kann das Netz schließlich bei Eingabe mindestens einer Oberfläche die restlichen Oberflächen rekonstruieren. Die Wissensbasis kann mit Hilfe des Neuronalen Netzes ergänzt bzw. vervollständigt werden. Für Gegenstände, die sich formal beschreiben lassen, könnten auch sog. Generative Adversarial Networks (GANs) eingesetzt werden. Hierbei werden die Ergebnisse, die ein erstes neuronales Netz ausgibt, dann von einem weiteren neuronalen Netz bewertet, das darauf trainiert wurde (z.B. aufgrund von bestimmten Regeln), die Qualität des Ergebnisses des ersten Netzes zu bewerten.

In Schritt S3 kommt ein wesentlicher Aspekt des erfindungsgemäßen Verfahrens zum Tragen. Wenn beispielsweise die beiden oben Schritte nicht erfolgreich waren oder ein oder mehrere Teilbereiche des 3D-(Teil-)Modells noch fehlen oder verdeckt sind (z.B. aufgrund fehlender Wissensbasis- bzw. Trainingsdaten), dann kann für viele Anwendungen zumindest eine Oberflächenrekonstruktion anhand der identifizierten verdeckten oder fehlenden Teilbereiche anhand einer zu ermittelten Geometrie vorgenommen werden. Die Geometrie kann gegebenenfalls schon durch Schritt S1 und/oder S2 bekannt sein oder ergibt sich durch folgendes Spiegelungsverfahren. Ein oder mehrere Symmetrieebenen bzw. -achsen - wie zu Figuren 2a bis 2d und Figur 4 beschrieben - werden bestimmt. Das 3D-Teilmodell wird zu einem vollständigen 3D-Modell durch Spiegeln zumindest eines Teils des 3D-Teilmodells an der bestimmten Symmetrieebene/-achse ergänzt. Letztendlich kann - wie in den Figuren 3a bis 3d gezeigt, das vervollständigte 3D-Modell an eine Ausgabeeinheit z.B. einem Display ausgegeben bzw. angezeigt werden. Das Verfahren verbessert nicht nur die Optik des 3D-Modells, sondern auch seine Aussagekraft für Messungen (wie z.B. Abschätzung von zu reinigenden Oberflächen oder noch verfügbarer Bau- bzw. Möblierungsraum).

In Schritt S4 können gegebenenfalls die 3D-Modell mit möglichst wenigen Symmetrieebenen/-achsen einfach geschlossen werden, falls die vorangegangenen Schritte nicht oder nur teilweise erfolgreich waren.

Die Schritte S1 bis S4 können auch wiederholt werden, bis ein vorgebbares Qualitätsmaß z.B. 90% an Vollständigkeit des vervollständigten 3D-Modells erreicht wird. Die Wiederholung der Schritte S1 bis S4 ist vor allem dann sinnvoll, wenn der gescannte bzw. erfasste Teilbereich nur eine Seite des Objekts umfasst. In diesem Fall kann durch mehrfache Spiegelung an weiteren bestimmten Symmetrieebenen bzw. -achsen das 3D-Teilmodell zu einem vervollständigten 3D-Modell iterativ ergänzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" kann im Zusammenhang mit der Erfindung beispielsweise eine Computer-Implementierung des Verfahrens verstanden werden, bei dem insbesondere ein Prozessor, der Teil der Steuerungs-/Rechenvorrichtung bzw. - einheit sein kann, mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Verfahren zum computergestützten Vervollständigen eines 3D-Teilmodells von einem durch mindestens eine Erfassungseinrichtung erfassten Teilbereich eines Objekts (T, K), wobei das 3D-Teilmodell mit einem verdeckten oder fehlenden Teilbereich des Objekts, der sich außerhalb des zu vervollständigenden 3D-Teilmodells des Objekts befindet, ergänzt werden kann, aufweisend folgende Schritte:
a) Ermitteln einer Geometrie (R, C) des Objektes durch Vergleich des 3D-Teilmodells mit einem oder mehreren vergleichbaren Objekten aus einer vorgebbaren oder vorbestimmten Menge von Objekten und/oder durch Vergleich des 3D-Teilmodells mit einem 3D-Modell, das durch Spiegeln zumindest eines Teils des 3D-Teilmodells an einer zuvor bestimmten Symmetrieebene (SY) oder Symmetrieachse entstanden ist,
b) Identifizieren des verdeckten oder fehlenden Teilbereichs des Objekts anhand der ermittelten Geometrie des Objekts,
c) Ergänzen des 3D-Teilmodells zu einem vollständigen 3D-Modell mit dem identifizierten verdeckten oder fehlenden Teilbereich des Objekts, und
c) Ausgeben des vervollständigten 3D-Modells an einer Ausgabeeinheit.

2. Verfahren nach dem vorhergehenden Anspruch, **dadurch gekennzeichnet, dass** für den Vergleich
in Schritt a) ein 3D-Objekterkennungsverfahren (S1) durchgeführt wird, das eine Wissensbasis von Objekten nach einem oder mehreren vergleichbaren Objekten durchsucht und erkennt, wobei als Ergebnis des durchgeführten 3D-Objekterkennungsverfahrens eine Menge von erkannten vergleichbaren Objekten ausgegeben wird.

3. Verfahren nach dem vorhergehenden Anspruch, **dadurch gekennzeichnet, dass** für das 3D-Objekterkennungsverfahren ein trainiertes sowie trainierbares Neuronales Netz (S2) verwendet wird, um eine Ähnlichkeit zwischen dem 3D-Teilmodell und zumindest einem Objekt aus der Wissensbasis zu erkennen.

4. Verfahren nach einem der vorhergehenden Ansprüche, **dadurch gekennzeichnet, dass** die Symmetrieebene (SY) oder die Symmetrieachse dadurch bestimmt wird, dass die Symmetrieebene oder -achse möglichst senkrecht zu einer Bezugsebene (B) des Objekts schrittweise über die Oberfläche des 3D-Teilobjekts verschoben wird, bis ein Vergleich von Teilbereichen des 3D-Teilobjekts auf der einen Seite der Symmetrieebene oder - achse mit Teilbereichen des 3D-Teilobjekts auf der anderen Seite der Symmetrieebene oder -achse einen vorgebbaren Übereinstimmungsgrad erreicht.

5. Verfahren nach einem der vorhergehenden Ansprüche, **dadurch gekennzeichnet, dass** die Schritte (S1 bis S4) nach einem der vorhergehenden Ansprüche 1 bis 3 wiederholt werden, bis ein vorgebbares Qualitätsmaß an Vollständigkeit des vervollständigten 3D-Modells erreicht wird.

6. Vorrichtung zum computergestützten Vervollständigen eines durch Punkte gebildeten 3D-Teilmodells von einem durch mindestens eine Erfassungseinrichtung erfassten Teilbereich eines Objekts (T, K), wobei das 3D-Teilmodell durch einen verdeckten oder fehlenden Teilbereich des Objekts, der sich außerhalb des zu vervollständigenden 3D-Teilmodells des Objekts befindet, ergänzt werden kann, wobei die Vorrichtung dazu ausgelegt ist, folgende Schritte auszuführen:
a) Ermitteln einer Geometrie (R, C) des Objektes durch Vergleich des 3D-Teilmodells mit einem oder mehreren vergleichbaren Objekten aus einer vorgebbaren oder vorbestimmten Menge von Objekten und/oder durch Vergleich des 3D-Teilmodells mit einem 3D-Modell, das durch Spiegeln zumindest eines Teils des 3D-Teilmodells an einer zuvor bestimmten Symmetrieebene (SY) oder Symmetrieachse entstanden ist,
b) Identifizieren des verdeckten oder fehlenden Teilbereichs des Objekts anhand der ermittelten Geometrie des Objekts,
c) Ergänzen des 3D-Teilmodells zu einem vollständigen 3D-Modell mit dem identifizierten verdeckten oder fehlenden Teilbereich des Objekts, und
c) Ausgeben des vervollständigten 3D-Modells an einer Ausgabeeinheit.

7. Vorrichtung nach dem vorhergehenden Anspruch, **dadurch gekennzeichnet, dass** die Vorrichtung dazu ausgelegt ist,
für den Vergleich in Schritt a) ein 3D-Objekterkennungsverfahren (S1) durchzuführen, das eine Wissensbasis von Objekten nach einem oder mehreren vergleichbaren Objekten durchsucht und erkennt, wobei als Ergebnis des durchgeführten 3D-Objekterkennungsverfahrens eine Menge von erkannten vergleichbaren Objekten ausgegeben wird.

8. Vorrichtung nach einem der vorhergehenden Vorrichtungsansprüche, **dadurch gekennzeichnet, dass** die Vorrichtung dazu ausgelegt ist, für das 3D-Objekterkennungsverfahren ein trainiertes sowie trainierbares Neuronales Netz (S2) zu verwenden, um eine Ähnlichkeit zwischen dem 3D-Teilmodell und zumindest einem Objekt aus der Wissensbasis zu erkennen.

9. Vorrichtung nach einem der vorhergehenden Vorrichtungsansprüche, **dadurch gekennzeichnet, dass** die Vorrichtung dazu ausgelegt ist, die Symmetrieebene (SY) oder die Symmetrieachse dadurch zu bestimmen, dass die Symmetrieebene oder -achse möglichst senkrecht zu einer Bezugsebene des Objekts schrittweise über die Oberfläche des 3D-Teilobjekts verschoben wird, bis ein Vergleich von Teilbereichen des 3D-Teilobjekts auf der einen Seite der Symmetrieebene oder -achse mit Teilbereichen des 3D-Teilobjekts auf der anderen Seite der Symmetrieebene oder -achse einen vorgebbaren Übereinstimmungsgrad erreicht.

10. Vorrichtung nach einem der vorhergehenden Vorrichtungsansprüche, **dadurch gekennzeichnet, dass** die Vorrichtung dazu eingerichtet ist, die Schritte (S1 bis S4) nach einem der vorhergehenden Ansprüche 1 bis 3 zu wiederholen, bis ein vorgebbares Qualitätsmaß an Vollständigkeit des vervollständigten 3D-Modells erreicht wird.

11. Computerprogrammprodukt, umfassend Befehle, die bei der Ausführung des Computerprogramms durch einen Computer diesen veranlassen, das Verfahren nach einem der vorhergehenden Verfahrensansprüche auszuführen.

12. Computerlesbares Speicher- oder Datenübertragungsmedium, umfassend Befehle, die bei der Ausführung durch einen Computer diesen veranlassen, das Verfahren nach einem der vorhergehenden Verfahrensansprüche auszuführen.
